# EUROPEAN PATENT APPLICATION

(11) **EP 4 711 342 A1**
(43) Date of publication of application: **18.03.2026**
(21) Application number: 24200389.5
(22) Date of filing: 13.09.2024
(51) Int. Cl.: C02F 3/26, C02F 3/30, C02F 3/00

(54) **INJECTION OF PURE OXYGEN FOR ENHANCEMENT OF NITROGEN REMOVAL IN WASTEWATER TREATMENT PROCESSES**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Gas AB/ Gas Markets, 212 09 Malmö (SE); Air Liquide Belge SA, 1130 Bruxelles (BE)
(72) Inventor: Boussemaere, Roel, 1130 BRUSSELS (BE); Alexandersson, John Tomas, 215 37 Malmö (SE); Lamond, Rudy, 1130 BRUSSELS (BE); Parravicini, Giulia, 1130 BRUSSELS (BE); Marion, Sébastien, 215 37 Malmö (SE)
(74) Representative: Air Liquide

(57) **Abstract**

A process for treating water in a treatment plant, in which a biodegradable material present in the water is biodegraded at least partly by microorganisms, and in which the nitrogen contained in the water is biologically treated by successive stages of nitrification and denitrification, characterized in that the following measures are taken:
- an injection of oxygen or of a gas mixture comprising oxygen is performed into delimited sections of the denitrification zone;
- creating this way around the, or each, injection, a "pocket" or bounded volume wherein the dissolved oxygen concentration is higher than the dissolved oxygen concentration in the rest of the zone i.e outside of these bounded volumes;
- and wherein at least 75% of the denitrification zone is characterized by an oxygen dissolved concentration being lower that 2mg/l and preferentially being lower than 0.5mg/l, and more preferentially being lower than 0.2mg/l, whereas up to 25% of the denitrification zone is characterized by an oxygen dissolved concentration being above 0 mg/l.

## Description

The present invention relates to the field of wastewater treatment plants, which in the majority of cases implement activated sludge treatment. The nitrogen contained in wastewaters is currently biologically treated by successive stages of nitrification and denitrification. These two biological stages generate gaseous compounds, including molecular nitrogen, and nitrogen oxides, in particular nitrous oxide (N₂O), which is considered negatively as being a greenhouse gas.

One could also mention the existence of non-conventional systems like the SHARON processes (SHARON being an abbreviation for Stable reactor system for High Ammonia Removal Over Nitrite), but also the ANAMMOX type of nitrogen treatment systems (ANAMMOX being an abbreviation for "Anaerobic Ammonium Oxidation), wherein Anammox is using a special type of bacteria, and wherein in the Anammox reaction, nitrite and ammonium ions n are converted directly into diatomic nitrogen and water.

Let's remind also that the nitrification step involves the biological oxidation of ammonium (NH₄⁺ ) into nitrite (NO₂⁻ ) and as the case may be to nitrate (NO₃⁻ ).

This reaction is favored in an aerobic environment, and its N₂O yield is normally low, as this gas is a co-product of the reaction and is mainly produced under biological stress conditions. Oxygen is generally injected into the lower part of the tank by means of a compressed air injection, using an aeration system such as those well known to those skilled in this art.

Denitrification is a respiratory process during which soluble forms of nitrogen (nitrate NOs - , nitrite NO₂ -) are reduced to gaseous compounds, notably into gaseous nitrogen N₂. Denitrification is favoured by anoxic conditions, and increases with nitrate content. The yield of N₂O is high, as this gas is an intermediate product of the transformation process. When transformation is complete, it leads to the formation of nitrogen N₂, which is released to the atmosphere in gas phase, thus eliminating soluble forms of nitrogen without transferring pollution. On the other hand, if the denitrification process is incomplete, N₂O can be released / stripped / emitted to the atmosphere.

Going more into details, one of the major components of wastewater, both municipal and industrial, is nitrogen, which usually is bound in chemical compounds and referred to as either organic or inorganic nitrogen. It is important to reduce the concentration of this element in the wastewater before reaching the recipient as it causes eutrophication in the environment. The overall aim of a biological wastewater treatment plant is to lower the concentration of nitrogen by transforming organic nitrogen into nitrogen gas, which is released into the atmosphere. This is commonly done by mixing the incoming wastewater with activated sludge, which consists of bacteria and microorganisms. The transformation process involves different types of bacteria and they require two different operating conditions, usually described as "aerobic" and "anoxic", both terms reflecting the availability of oxygen.

Oxygen is added in the aerobic part, usually by injection of compressed air in the bottom of the tank with a special aeration system. The air will also stir the contents in the plant. Oxygen from air is not actively added in the anoxic part and therefore submerged stirrers are usually needed to mix the water.

Organic nitrogen is converted to inorganic nitrogen through hydrolysis and degradation of organic material. This process occurs both in the aerobic and anoxic parts of the treatment plant. The sequential steps to convert inorganic nitrogen gas starts with ammonium, which is oxidized to nitrate in the aerobic part. This is done in a multi-step process, with two main processes, involving two different types of bacteria normally referred to as ammonium oxidizing bacteria and nitrite oxidizing bacteria.

First, ammonium oxidizing bacteria oxidizes ammonium into nitrite and this is then oxidized further into nitrate by nitrite oxidizing bacteria.

Both of these reactions demand aerobic conditions.

Nitrate is then reduced into nitrogen gas together with the consumption of organic carbonaceous material in the anoxic part referred to as "denitrification". The sequential treatment can practically be arranged in either pre-denitrification before the aerobic part where organic material in the wastewater is used or post-denitrification, which is placed after the aerobic process. It is necessary to have an internal recirculation with a pre-denitrification in order to supply nitrate produced in the aerobic part to the anoxic step. This recirculation is not needed in a post-denitrification but instead there is a need for an external carbon source as the organic matter has been already degraded in the aerobic part.

The conditions in the denitrification zone is such that only heterotrophic bacteria are participating in the nitrogen removal process converting nitrate into nitrogen gas. This type of bacteria also has the possibility to take up dissolved nitrous oxide gas and convert it into nitrogen gas. Promoting the formation of nitrous oxide gas in the denitrification zone would lead to a more efficient and far reaching nitrogen removal process.

So it's easy to understand that, in order to avoid or limit N₂O emissions, it's particularly relevant to work on the denitrification stage.

As will be seen in more details in the following, the present invention proposes, in order to improve the results obtained in denitrification, and notably in order to improve the removal of N₂O, to inject pure oxygen into delimited sections of the denitrification zone, so that overall this zone is indeed under anoxic conditions, whereas some of the volumes of the zone are under conditions of high oxygen content.

In particular, the oxygen content in the vicinity of the point of injection of the oxygen gas can be considered as being high, or at any rate higher than in the average volume of the surrounding zone.

In other words, according to the present invention, the environment around the oxygen injection will be characterized by a high dissolved oxygen content, over a short distance and for a very short time, creating a temporary aerobic environment, in an overall bulk volume which is characterized by anoxic conditions.

The wording "high oxygen content" means in the context of the present invention an oxygen content being above 0,3-4 mg /l in the bulk liquid and up to 40 mg/L in the direct jet of the injection system.

On the other hand, the wording "short distance" qualifying the volume in which the high dissolved oxygen content is prevailing should be understood as 3 to 30% of the global volume.

These small "compartments" (or "pockets" or "bounded volumes") of oxygen enriched volumes will promote oxidation processes that will enhance the initial steps in the oxidation of ammonia. Furthermore, the conditions with a high concentration of ammonia and a high specific ammonia load will increase the probability for formation of nitrous oxide.

This component will however remain in the liquid, as the tendency of stripping the nitrous oxide from a water phase into the atmosphere is minimized due to the use of pure oxygen.

Using technologies of nozzles creating a high oxygen transfer efficiency, with the use of pure oxygen, this eliminates almost all stripping of gas although aerated. N₂O has a quite high solubility, comparable to the solubility of CO₂ (about 80%) so it is only stripped out when degassed or sparged with another gas.

Simultaneously, this nitrous oxide will be consumed by denitrifying bacteria in the anoxic parts of the denitrification volume.

In other words, this invention is therefore intended for a wastewater treatment plant designed or operated for nitrogen removal with a process configuration for a pre-denitrification process.

Injection of small amounts of pure oxygen in the denitrification zone can improve the overall nitrogen removal. The overall conditions in the denitrification zone should still be anoxic but there will be spatial volumes, close to where the oxygen is injected, with higher oxygen concentration. Presence of oxygen will promote the bacterial oxidation of ammonia to a higher oxidation state such as nitrous oxide. This produced nitrous oxide is then reduced when it is entering anoxic parts of the pre-denitrification zone.

According to the invention, the injection of pure oxygen in the denitrification zone without creating a bulk dissolved oxygen concentration which is higher than a required set point (typically required to be not above 0.2 mg/L) will promote the nitrogen removal process. The environment directly around the pure oxygen gas bubble (pocket) will have a high dissolved oxygen concentration which will exist for a short time and short distance (as explained here above). This will create a spatial distribution of temporary low aerobic environments throughout the bulk which is characterized by anoxic conditions.

These small compartments of oxygen-enriched volumes will promote oxidation processes that will enhance the initial steps in the oxidation of ammonia. Furthermore, the conditions with a high concentration of ammonia and a high specific ammonia load will increase the probability for formation of nitrous oxide. This will however remain in the liquid as the tendency of stripping the nitrous oxide from the water phase into the atmosphere is minimized due to the use of pure oxygen.

Simultaneously, will this nitrous oxide be consumed by denitrifying bacteria in the anoxic parts of the denitrification volume.

This invention is intended for a wastewater treatment plant designed or operated for nitrogen removal with a process configuration for a pre-denitrification process. The invention is to inject a balanced amount of "pure" oxygen i.e with an oxygen content of 90 % or higher. It is important to continue to have anoxic conditions in 75% or more of the denitrification zone and up to 25% of the volume where the concentration of dissolved oxygen can be above 0 mg/L. According to the invention it is preferred to reach conditions wherein the dissolved oxygen concentration should not exceed 0.5 mg/l in the bulk but higher concentrations up to 2 mg/L could be measured locally.

The invention deals therefore with a process for treating water in a treatment plant, in which a biodegradable material present in the water is biodegraded at least partly by microorganisms, and in which the nitrogen contained in the water is biologically treated by successive stages of nitrification and denitrification, the nitrification step involving the biological oxidation of ammonium (NH₄ ⁺ ) into nitrite (NO₂ ⁻ ) and as the case may be into nitrate (NO₃⁻ ) and being favored in an aerobic environment, whereas denitrification involves the reduction of soluble forms of nitrogen into gaseous compounds, notably into nitric oxide NO, nitrous oxide N₂O and nitrogen N₂, and being favoured by anoxic conditions,
characterized in that the following measures are taken :
- an injection of oxygen or of a gas mixture comprising oxygen is performed into delimited sections of the denitrification zone;
- creating this way around the, or each, injection, a "pocket" or bounded volume wherein the dissolved oxygen concentration is higher than the dissolved oxygen concentration in the rest of the zone i.e outside of these bounded volumes;
- and wherein at least 75% of the denitrification zone is characterized by an oxygen dissolved concentration being lower that 2mg/l and preferentially being lower than 0.5mg/l, and more preferentially being lower than 0.2mg/l, whereas up to 25% of the denitrification zone is characterized by an oxygen dissolved concentration being above 0 mg/l.

## Claims

1. A process for treating water in a treatment plant, in which a biodegradable material present in the water is biodegraded at least partly by microorganisms, and in which the nitrogen contained in the water is biologically treated by successive stages of nitrification and denitrification, the nitrification step involving the biological oxidation of ammonium (NH₄ ⁺ ) into nitrite (NO₂ ⁻) and as the case may be into nitrate (NO₃⁻ ) and being favored in an aerobic environment, whereas denitrification involves the reduction of soluble forms of nitrogen into gaseous compounds, notably into nitric oxide NO, nitrous oxide N₂O and nitrogen N₂, and being favoured by anoxic conditions,
**characterized in that** the following measures are taken :
- an injection of oxygen or of a gas mixture comprising oxygen is performed into delimited sections of the denitrification zone;
- creating this way around the, or each, injection, a "pocket" or bounded volume, wherein the dissolved oxygen concentration is higher than the dissolved oxygen concentration in the rest of the zone i.e outside of these bounded volumes;
- and wherein at least 75% of the denitrification zone is **characterized by** an oxygen dissolved concentration being lower that 2mg/l and preferentially being lower than 0.5mg/l, and more preferentially being lower than 0.2mg/l, whereas up to 25% of the denitrification zone constituted by said pockets or bounded volumes is **characterized by** an oxygen dissolved concentration being above 0 mg/l.

2. Process according to claim 1, wherein the gas mixture injected is a mixture comprising at least 90% of oxygen.

3. Process according to claim 1 or 2, wherein up to 25% of the denitrification zone constituted by said pockets or bounded volumes is **characterized by** an oxygen dissolved concentration being above 0 mg/l, preferentially not higher that 0.5mg/l, and more preferentially not higher than 0.2 mg/l.
